# FASCICULE DE BREVET EUROPEEN

(11) **EP 2 917 969 B1**
(45) Date de publication et mention de la délivrance du brevet: **18.04.2018**
(21) Numéro de dépôt: 13785465.9
(22) Date de dépôt: 31.10.2013
(51) Int. Cl.: H01R 4/30, F16B 39/30, H01R 4/50, H01R 13/504, H01R 43/26, H01R 13/74

(54) **DISPOSITIF DE FIXATION D'UNE COSSE DE RACCORDEMENT ELECTRIQUE SUR UN SUPPORT**
VORRICHTUNG ZUM FIXIEREN EINER ELEKTRISCHEN ANSCHLUSSKLEMME AN EINEM TRÄGER
DEVICE FOR FIXING AN ELECTRICAL CONNECTION TERMINAL TO A SUPPORT

(30) Priorité: 12.11.2012 FR 1260706
(43) Date de publication de la demande: 16.09.2015
(73) Titulaire: Dubuis et Cie S.A.S., 41000 Villebarrou (FR)
(72) Inventeur: CUMANT, Mickaël, F-41190 Herbault (FR)
(74) Mandataire: SBD IPAdmin
(86) Numéro de dépôt international: PCT/EP2013/072829
(87) Numéro de publication internationale: WO 2014/072228

(56) Documents cités:
- DE-U1- 20 102 063
- GB-A- 1 273 146
- US-A- 2 940 495

## Description

### DOMAINE TECHNIQUE

L'invention concerne un dispositif de fixation d'une cosse de raccordement électrique sur un support.

### ETAT DE LA TECHNIQUE

Dans les aéronefs, certains équipements doivent être mis à la masse. A cet effet, chaque équipement est raccordé électriquement à la carcasse de l'avion, par exemple au moyen de tresses métalliques ou fils de masse. Les extrémités des tresses ou des fils métalliques sont reçues dans des cosses qui sont fixées sur des supports spécifiques, les supports étant montés sur la carcasse de l'avion.

Dans ce domaine, la fixation d'une cosse sur un support est généralement réalisée grâce à une vis et à un écrou, la cosse étant enserrée entre la tête de la vis et une surface du support.

Afin d'assurer un bon contact électrique entre la cosse et le support, la surface du support doit être décapée préalablement au montage de la vis et de l'écrou. Une fois le montage effectué, la zone décapée du support doit être protégée contre la corrosion.

De plus, afin de garantir une bonne résistance du montage aux vibrations, l'écrou est généralement fixé au support par des rivets.

Le montage de la vis et de l'écrou, ainsi que la mise en place des rivets, nécessite de pouvoir accéder aux deux côtés du support lors du montage.

On connait par ailleurs du document EP 1 376 766 au nom de la demanderesse, un dispositif de fixation d'une cosse de raccordement électrique sur un support, le support étant constitué par exemple par l'âme d'un rail de voie ferrée. Le dispositif comprend une bague prévue pour être introduite dans un trou cylindrique ménagé dans le support, une douille prévue pour être enfilée dans la bague et présentant un taraudage, et une vis filetée dont le filetage est conjugué au taraudage de la douille. Lors du montage du dispositif, la bague est d'abord positionnée dans le trou cylindrique du support, puis un effort de traction est exercé sur la douille à l'aide d'un outil de manière à introduire en force la douille dans la bague, ce qui provoque une expansion radiale de la bague et un blocage de la bague dans l'orifice. Ensuite, la vis est vissée dans la douille, la cosse étant enserrée entre la tête de la vis et la bague, permettant ainsi de fixer la cosse sur le support et de créer un contact électrique entre la cosse et le support.

Le document DE20102063 U1 décrit un dispositif de fixation d'une cosse de raccordement électrique sur un support à l'aide d'un dispositif comprenant une bague, insérée dans un orifice du support, et une cheville insérée dans la bague. La vis fixant la cosse au support passe au travers de la cheville et est attachée à l'aide d'une douille. Un avantage de ce dispositif de fixation est qu'il ne nécessite pas un décapage préalable de la surface du support pour assurer un bon contact électrique entre la cosse et le support. En effet, le contact électrique est réalisé entre la bague et la surface interne du trou cylindrique ménagé dans le support.

De plus, le dispositif de fixation présente un encombrement réduit.

En outre, le dispositif de fixation ne nécessite pas d'avoir accès aux deux côtés du support lors du montage.

Cependant, un tel dispositif de fixation n'est traditionnellement pas utilisé dans des applications qui requièrent une résistance aux vibrations, tel que par exemple pour la mise à la masse d'équipements embarqués dans un aéronef. En effet, les vibrations auxquelles sont soumis les équipements peuvent provoquer un desserrage de la vis qui maintient la cosse.

Pour éviter un desserrage de la vis, il serait possible d'ajouter une rondelle frein entre la tête de vis et le support.

Toutefois, l'ajout d'une telle rondelle aurait pour conséquence d'augmenter le nombre de pièces composant le dispositif de fixation et d'alourdir le dispositif de fixation de manière inacceptable pour les applications envisagées, ce dispositif étant multiplié un grand nombre de fois dans un aéronef.

### RESUME DE L'INVENTION

Un but de l'invention est de proposer un dispositif de fixation d'une cosse de raccordement électrique sur un support qui soit léger et résistant aux vibrations.

Ce but est atteint dans le cadre de la présente invention grâce à un dispositif de fixation d'une cosse de raccordement électrique sur un support comme décrit dans la revendication 1. Le terme « distordu » qualifie un filet qui présentait initialement une forme hélicoïdale circulaire avec un pas donné au moment de sa fabrication par taraudage, mais qui a, par la suite, été déformé de manière permanente, de sorte qu'il présente par exemple une forme hélicoïdale non circulaire ou un pas modifié ou une discontinuité. Une telle déformation permanente peut être obtenue en soumettant la cheville à un écrasement dans la portion de verrouillage. Cette étape d'écrasement est réalisée en usine lors de la fabrication du dispositif.

Lorsque la vis de fixation pénètre dans la portion de verrouillage, l'engagement du filet externe de la vis avec le filet interne de l'alésage tend à rétablir la forme initiale du filet, et par conséquent à déformer la portion de verrouillage. La déformation de la portion de verrouillage crée un effort de freinage sur le filet externe de la vis.

La portion de verrouillage permet ainsi d'empêcher un desserrage accidentel de la vis sous l'action de vibrations imparties au support ou d'une rotation de la cosse par rapport au support.

Le dispositif de fixation peut en outre présenter les caractéristiques suivantes :
- la portion de verrouillage a subi un écrasement selon une direction radiale par rapport à un axe de l'alésage,
- dans la portion de verrouillage, le filet interne de l'alésage présente une forme hélicoïdale non circulaire multilobée,
- la portion de verrouillage a subi un écrasement dans deux zones diamétralement opposées,
- la portion de verrouillage a subi un écrasement dans trois zones réparties angulairement à 120° les unes des autres autour d'un axe de l'alésage,
- la portion de verrouillage a subi un écrasement dans quatre zones agencées deux à deux symétriquement de part et d'autre d'un plan de symétrie passant par l'axe de l'alésage,
- la portion de verrouillage a subi un écrasement selon une direction axiale de l'alésage,
- la portion de verrouillage présente une ou plusieurs fentes transversales ayant favorisé l'écrasement de la deuxième portion selon la direction axiale de l'alésage,
- la bague présente une portion de réception, et la cheville comprend une portion d'insertion propre à être insérée en force dans la portion de réception de la bague pour provoquer la déformation de la bague,
- la portion d'insertion de la cheville présente une surface externe de forme sensiblement conique,
- la portion de réception de la bague présente une surface interne de forme sensiblement conique ou cylindrique,
- une fois la cheville insérée en force dans la portion de réception de la bague, la portion de verrouillage de la cheville fait saillie à l'extérieur de la portion de réception,
- la cheville présente une paroi entourant l'alésage, la paroi présentant, dans la portion de verrouillage, une épaisseur inférieure à une épaisseur de la paroi dans la portion d'insertion,
- la bague est formée en un premier matériau et la cheville est formée en un deuxième matériau, le premier matériau présentant une dureté inférieure à la dureté du deuxième matériau,
- la bague est en alliage d'aluminium ou en cuivre et la cheville est en alliage d'aluminium, en titane ou en acier,
- la cheville présente un épaulement propre à venir en butée contre la bague pour limiter l'insertion de la cheville dans la bague,
- la bague présente un épaulement propre à venir en appui contre une surface du support d'un premier côté du support, tandis que la portion de verrouillage de la cheville s'étend d'un deuxième côté du support, opposé au premier côté,
- la cheville est formée en une seule pièce de matériau.

L'invention se rapporte également à un procédé de fabrication d'un dispositif de fixation tel que défini précédemment, comprenant une étape de fabrication de la cheville consistant à déformer de manière permanente une portion de la cheville en appliquant sur la cheville un effort de déformation, la portion déformée de la cheville constituant la portion de verrouillage de la cheville.

L'effort de déformation peut être appliqué en écrasant la portion à déformer de la cheville, par exemple au moyen d'un outil de serrage ou d'une presse ou encore au moyen d'une ou plusieurs billes mises en appui contre une surface externe de la cheville dans la portion à déformer.

### PRESENTATION DES DESSINS

D'autres caractéristiques et avantages ressortiront encore de la description qui suit, laquelle est purement illustrative et non limitative et doit être lue en regard des figures annexées, parmi lesquelles :
- la figure 1 représente de manière schématique, en coupe longitudinale, un dispositif de fixation conforme à l'invention, une fois monté sur un support,
- les figures 2A et 2B représentent de manière schématique un ensemble bague et cheville avant montage sur le support, respectivement en coupe longitudinale et en vue transversale, conforme à un premier mode de réalisation de l'invention,
- les figures 3 à 6 illustrent de manière schématique des étapes d'un procédé de montage du dispositif de fixation,
- les figures 7A et 7B représentent de manière schématique un ensemble bague et cheville avant montage sur le support, respectivement en coupe longitudinale et en vue transversale, conforme à un deuxième mode de réalisation de l'invention,
- les figures 8A et 8B représentent de manière schématique un ensemble bague et cheville avant montage sur le support, respectivement en coupe longitudinale et en vue transversale, conforme à un troisième mode de réalisation de l'invention,
- les figures 9A et 9B représentent de manière schématique un ensemble bague et cheville avant montage sur le support, respectivement en coupe longitudinale partielle et en coupe transversale, conforme à un quatrième mode de réalisation de l'invention.

### DESCRIPTION DETAILLEE D'UN MODE DE REALISATION

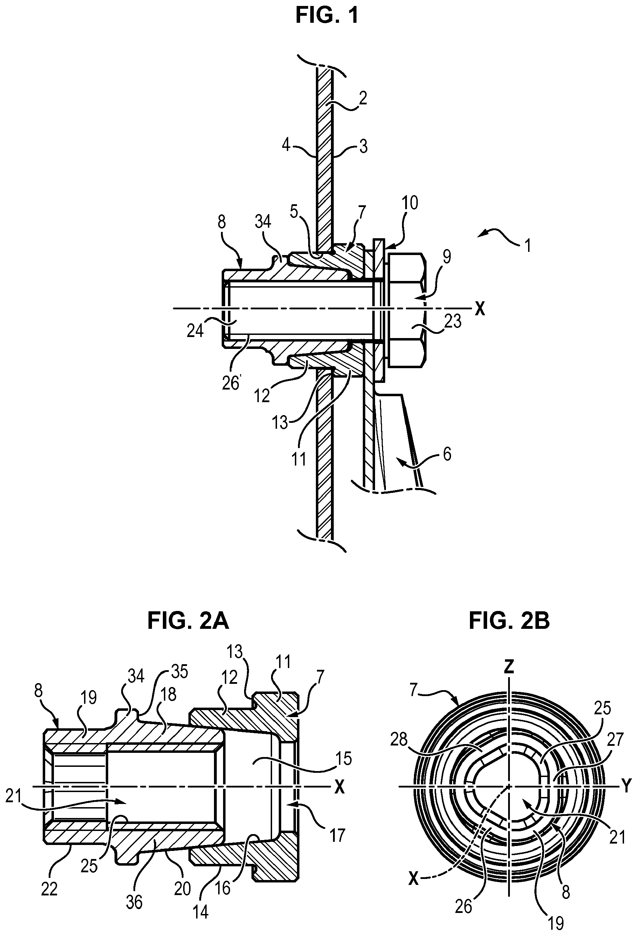

Sur la figure 1, le dispositif de fixation 1 est représenté lorsqu'il est monté sur un support 2. Le support 2 est en l'occurrence une paroi métallique mince, telle que par exemple une paroi d'une carcasse d'un aéronef. La paroi 2 est par exemple en alliage d'aluminium. La paroi 2 présente une forme généralement plane avec un premier côté 3 et un deuxième côté 4, opposé au premier côté 3. La paroi 2 est munie d'un orifice traversant 5 destiné à recevoir le dispositif de fixation 1 afin de fixer une cosse 6 de raccordement électrique sur la paroi 2.

Le dispositif de fixation 1 comprend une bague 7, une cheville 8, une vis 9 et une rondelle 10.

La vis 9 comprend une tête 23 et une tige filetée 24.

La cosse 6 est enserrée entre la rondelle 10 et la bague 7, la tête 23 de la vis 9 venant presser la cosse contre la bague 7 par l'intermédiaire de la rondelle 10.

Les figures 2A et 2B représentent de manière schématique un ensemble bague 7 et cheville 8 conforme à un premier mode de réalisation de l'invention, l'ensemble étant représenté avant montage sur le support 2.

La bague 7 est formée en métal, de préférence en alliage d'aluminium ou en cuivre. La bague 7 présente une première portion 11 (ou collerette) propre à être mise en contact électriquement avec la cosse 6, et une deuxième portion 12 propre à être insérée dans l'orifice 5 à travers la paroi 2. La bague 7 comprend un épaulement 13 joignant la première portion 11 et la deuxième portion 12, l'épaulement 13 étant propre à venir en appui sur une surface de la paroi 2, du premier côté 3 de la paroi 2 lorsque la bague 7 est positionnée dans l'orifice 5.

La première portion 11 de la bague 7 présente un orifice 17 permettant d'insérer la vis 9 à travers la bague 7, à partir du premier côté de la paroi 3 lorsque la bague 7 est positionnée dans l'orifice 5.

La deuxième portion 12 présente une surface externe 14 propre à être en contact avec la surface interne de l'orifice 5 lorsque la bague 7 est positionnée dans l'orifice 5. La surface externe 14 de la deuxième portion 12 présente une forme générale cylindrique de révolution. La deuxième portion 12 présente en outre un logement 15 débouchant d'un côté de la bague 7, opposé à la première portion 11. Le logement 15 présente une surface interne 16 de forme générale conique, ayant un diamètre interne qui diminue en se rapprochant de la première portion 11. Alternativement, la surface interne 16 pourrait présenter une forme générale cylindrique.

La cheville 8 est formée en métal, de préférence en alliage d'aluminium, en titane ou en acier. Le matériau constitutif de la cheville 8 présente une dureté supérieure au matériau constitutif de la bague 7.

La cheville 8 comprend une première portion 18 (ou portion d'insertion) propre à être insérée dans le logement 15 de la bague 7 et une deuxième portion 19 (ou portion de verrouillage) propre à faire saillie à l'extérieur du logement 15 une fois la cheville 8 insérée dans la bague 7.

La première portion 18 présente une surface externe 20 de forme générale conique ayant un diamètre externe qui diminue en s'éloignant de la deuxième portion 19. La surface externe 20 de la première portion 18 de la cheville 8 et la surface interne 16 du logement 15 de la bague 7 présentent ainsi des formes complémentaires. La complémentarité des formes permet d'obtenir un contact homogène de la surface externe 20 sur la surface interne 16 lors de l'insertion de la cheville 8 dans le logement 25, et par conséquent d'obtenir une déformation homogène de la deuxième portion 12 de la bague 7 (la deuxième portion 12 de la bague 7 conserve une forme cylindrique pendant la déformation).

La première portion 18 comprend également une couronne 34 de blocage s'étendant en saillie de la surface externe 20 et formant un épaulement 35 joignant la surface externe 20 à la couronne 34. La couronne 34 de blocage est positionnée à la jonction de la première portion 18 avec la deuxième portion 19.

La première portion 18 de la cheville 8 est propre à être insérée en force dans le logement 15, l'insertion ayant pour effet de provoquer une déformation de la bague 7 de manière à enchâsser la bague 7 dans l'orifice 5 de la paroi 2. Comme le matériau constitutif de la cheville 8 est plus dur que le matériau constitutif de la bague 7, seule la bague 7 est déformée.

L'épaulement 35 est propre à venir en butée contre la bague 7 pour limiter l'insertion de la première portion 18 de la cheville 8 dans le logement 15.

La deuxième portion 19 de la cheville 8 s'étend dans le prolongement de la première portion 18, mais présente une dimension amincie par rapport à la première portion 18. Plus précisément, la deuxième portion 19 de la cheville 8 présente une surface externe 22 ayant une dimension radiale inférieure à un diamètre externe de la première portion 18.

La cheville 8 présente également un alésage taraudé 21 ayant un axe longitudinal X, l'alésage 21 étant propre à recevoir la vis 9 pour fixer la cosse 6 sur la bague 7 et maintenir la cheville 8 en position dans la bague 7. L'alésage 21 s'étend à travers la cheville 8 selon une direction longitudinale de la cheville 8, sur toute la longueur de la cheville. En particulier, l'alésage 21 s'étend continûment à travers la première portion 18 et à travers la deuxième portion 19 de la cheville 8.

De plus, la cheville 8 présente une paroi 36 entourant l'alésage 21, la paroi 36 présentant, dans la deuxième portion 19, une épaisseur inférieure à une épaisseur de la paroi 36 dans la première portion 18. Cette caractéristique a pour effet de favoriser une déformation de la paroi de la cheville dans la deuxième portion 19, tout en préservant la deuxième portion 19 d'une déformation lors de l'insertion de la vis 9 dans l'alésage 21.

En plus de sa fonction de butée, la couronne 34 permet également de rigidifier la deuxième portion 19 pour préserver la deuxième portion d'une déformation. En particulier, la couronne 34 constitue une zone de plus forte épaisseur qui empêche une propagation de la déformation imposée à la deuxième portion 19 vers la première portion 18.

L'alésage 21 de la cheville 8 présente un filet interne 25 apte à coopérer avec un filet externe 26' de la tige 24 de la vis 9. Le filet interne 25 s'étend continûment dans la première portion 18 et dans la deuxième portion 19 de la cheville 8.

Toutefois, comme cela est illustré sur la figure 2B, la deuxième portion 19 de la cheville 8 est distordue. En effet, la deuxième portion 19 présente une section transversale non circulaire car elle a été déformée radialement de manière permanente. Par conséquent, dans la deuxième portion 19, l'alésage 21 présente également une section transversale non circulaire.

Plus précisément, la deuxième portion 19 a été déformée radialement dans trois zones 26, 27 et 28 réparties angulairement à 120° les unes par rapport aux autres autour de l'axe X de l'alésage 21, de sorte que la cheville 8 présente dans la portion de verrouillage 19 une section transversale de forme générale trilobée.

De plus, il résulte de cette déformation permanente que, dans la deuxième portion 19, le filet interne 25 de l'alésage 21 présente des distorsions (en l'occurrence le filet 25 présente une forme hélicoïdale non-circulaire), alors que dans la première portion 18, le filet interne 25 de l'alésage 21 ne présente pas de distorsion (c'est-à-dire que le filet 25 présente une forme hélicoïdale circulaire). Du fait de cette distorsion, le filet 25 est propre à créer dans les zones 26, 27, 28 un effort de frottement sur le filet externe 26 de la vis 9 lorsque la vis 9 est vissée dans la cheville 8.

La déformation radiale de la deuxième portion 19 peut être obtenue en écrasant la deuxième portion 19, par exemple au moyen d'un outil de serrage hydraulique. L'écrasement de la deuxième portion 19 provoque une déformation radiale permanente de la deuxième portion 19 de la cheville 8.

Alternativement, la déformation radiale de la deuxième portion 19 peut être obtenue en introduisant en force la deuxième portion 19 de la cheville 8 dans un outillage spécifique, l'outillage comprenant un alésage de guidage de la cheville, et une pluralité de billes maintenues dans une cage, les billes faisant saillie dans l'alésage de l'outillage.

L'application des billes contre la surface externe 22 de la cheville 8 provoque une déformation radiale permanente de la deuxième portion 19 de la cheville 8.

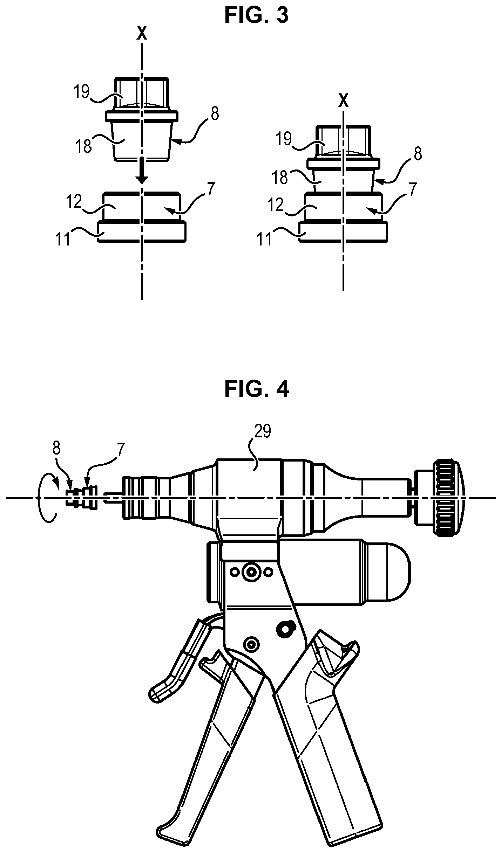

Les figures 3 à 6 illustrent de manière schématique des étapes d'un procédé de montage du dispositif de fixation 1 sur une paroi 2.

Selon une étape préliminaire illustrée sur la figure 3, la bague 7 et la cheville 8 sont préassemblées. La première portion 18 de la cheville 8 est insérée dans la deuxième portion 12 de la bague 7, de manière à solidariser la bague 7 et la cheville 8 entre elles. Cette étape de préassemblage est réalisée en usine lors de la fabrication du dispositif.

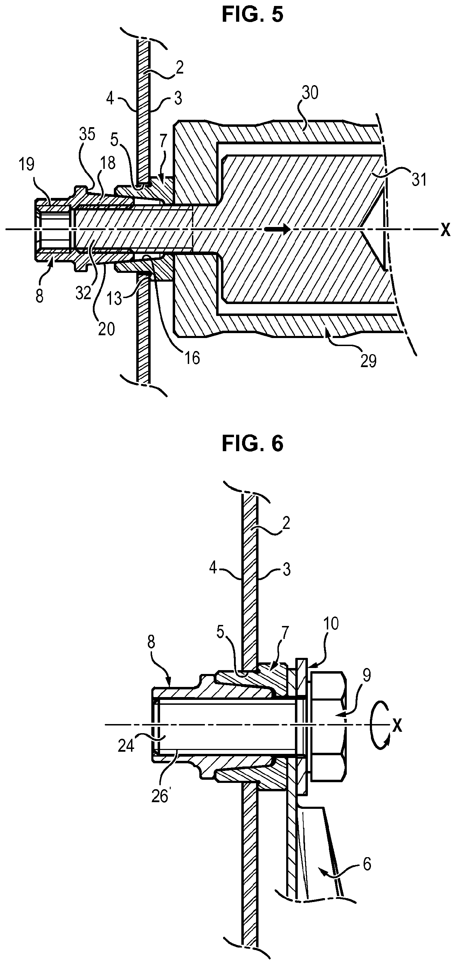

Selon une première étape illustrée sur la figure 4, l'ensemble bague 7 et cheville 8 préassemblées est vissé sur un outillage 29 de montage. Comme cela est visible sur la figure 5, l'outillage 29 comprend un cylindre 30 et un piston 31 monté coulissant à l'intérieur du cylindre 30. Le piston 31 présente une tige filetée 32 qui est insérée à travers l'orifice 17 de la bague 7 et vissée à l'intérieur de l'alésage 21 taraudé de la cheville 8.

La tige filetée 32 n'est vissée que dans la première portion 18 de la cheville 8, dans laquelle le filet interne 25 de l'alésage 21 n'est pas distordu.

Selon une deuxième étape illustrée sur la figure 5, l'ensemble bague 7 et cheville 8 préassemblées est positionné dans l'orifice 5 du support 2, l'épaulement 13 de la bague 8 venant en appui contre la surface du premier côté 3 de la paroi 2. On notera que la plus grande dimension transversale de la cheville 8 est inférieure ou égale à une dimension transversale de la deuxième portion 12 de la bague 7, pour permettre d'insérer l'ensemble dans l'orifice 5 depuis le premier côté 3 du support 2.

Dans cette position, la cheville 8 se trouve du deuxième côté 4 de la paroi 2. L'outillage 29 est actionné de manière à provoquer un déplacement du piston 31 à l'intérieur du cylindre 30. Le déplacement du piston 31 à l'intérieur du cylindre 30 a pour effet que le piston 31 exerce sur la cheville 8 un effort de traction selon une direction parallèle à l'axe X tendant à faire pénétrer la cheville 8 plus avant à l'intérieur de la bague 7 (c'est-à-dire en se rapprochant de la première portion 11). Du fait des formes coniques des surfaces 16 et 20, la pénétration de la cheville 8 à l'intérieur de la bague 7 provoque une expansion radiale de la bague 7. La bague 7 se trouve ainsi enchâssée dans l'orifice 5 de la paroi 2.

L'insertion de la cheville 8 à l'intérieur de la bague 7 est toutefois limitée par l'épaulement 35 venant en butée contre la bague 7.

Selon une troisième étape illustrée sur la figure 6, l'outillage de montage 29 est dévissé de l'ensemble bague 7 et cheville 8. Puis la tige 24 de la vis 9 est insérée à travers l'orifice 17 de la bague 7 et vissée à l'intérieur de l'alésage taraudé 21 de la cheville 8, afin de fixer la cosse 6 et la rondelle 10 sur l'ensemble bague 7 et cheville 8. Au cours du vissage, le filet externe 26 de la tige 24 de la vis 9 vient en engagement avec le filet interne 25 de l'alésage 21 successivement dans la première portion 18 et dans la deuxième portion 19.

Comme le filet interne 25 est distordu dans la deuxième portion 19, l'engagement du filet externe 26' dans le filet interne 25 provoque une déformation élastique radiale de la deuxième portion 19 (ou portion de verrouillage). Autrement dit, la deuxième portion 19 de la cheville 8 est déformée élastiquement sous l'action du filet externe 26 de la vis 9. Cela a pour effet de créer un effort de frottement sur le filet externe 26 de la vis 9, ce qui empêche un desserrage ultérieur de la vis 9 du fait de vibrations de la paroi 2 ou d'une rotation de la cosse 6 par rapport à la paroi 2. La vis 9 est ainsi verrouillée dans la cheville 8.

On notera que le dispositif de fixation 1 qui vient d'être décrit peut être monté sur un support, sans nécessiter d'accéder aux deux côtés 3 et 4 du support. Cela permet par exemple de fixer la cosse 6 directement sur une paroi 2 de la carcasse d'un aéronef, sans nécessiter l'utilisation d'un support spécifique additionnel fixé à la paroi 2.

De plus, comme il n'est pas nécessaire d'accéder aux deux côtés du support, le dispositif 1 peut être monté dans un orifice de fixation borgne.

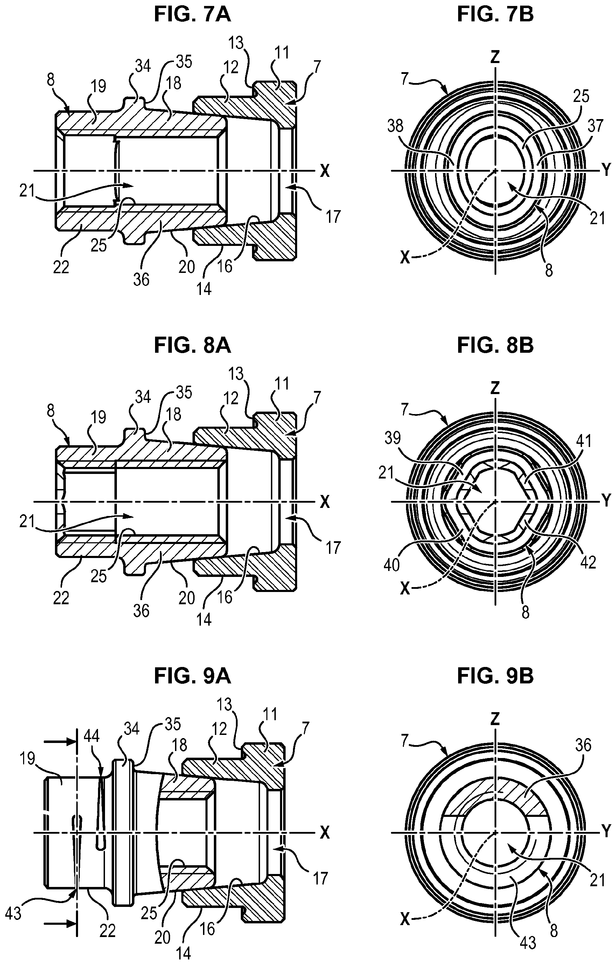

Les figures 7A et 7B représentent de manière schématique un ensemble bague 7 et cheville 8 conforme à un deuxième mode de réalisation de l'invention.

Ce deuxième mode de réalisation est identique au premier mode de réalisation, excepté que la deuxième portion 19 de la cheville 8 a été déformée radialement dans deux zones 37, 38 diamétralement opposées. Dans ce cas, la cheville 8 présente dans la portion de verrouillage 19 une section transversale de forme oblongue ou bilobée.

Du fait cette distorsion, le filet interne 25 est propre à créer dans les zones 37, 38, un effort de frottement sur le filet externe 26' de la vis 9 lorsque la vis 9 est vissée dans la cheville 8.

Les figures 8A et 8B représentent de manière schématique un ensemble bague 7 et cheville 8 conforme à un troisième mode de réalisation de l'invention.

Ce troisième mode de réalisation est identique au premier mode de réalisation, excepté que la deuxième portion 19 de la cheville 8 a été déformée radialement dans quatre zones 39 à 42 agencées deux à deux symétriquement de part et d'autre d'un plan de symétrie Z passant par l'axe X de l'alésage. Dans ce cas, la cheville 8 présente dans la portion de verrouillage 19 une section transversale de forme quadrilobée.

Du fait cette distorsion, le filet interne 25 est propre à créer dans les zones 39 à 42, un effort de frottement sur le filet externe 26' de la vis 9 lorsque la vis 9 est vissée dans la cheville 8.

Les figures 9A et 9B représentent de manière schématique un ensemble bague 7 et cheville 8 conforme à un quatrième mode de réalisation de l'invention.

Dans ce quatrième mode de réalisation, la deuxième portion 19 comprend deux fentes transversales 43 et 44 ménagées à travers la paroi 36 de la cheville 8. Chaque fente 43, 44 s'étend parallèlement à un plan orthogonal à l'axe X de l'alésage. De plus, les fentes 43 et 44 s'étendent à partir de deux côtés opposés de la paroi 36, de part et d'autre de l'axe X. Chaque fente 43, 44 s'étend sur plus de la moitié d'une section transversale de la deuxième portion 19.

Après que la deuxième portion 19 a été fendue selon les deux fentes 43 et 44, la deuxième portion 19 de la cheville 8 a été déformée de manière permanente par écrasement de la deuxième portion 19 parallèlement à l'axe X de l'alésage.

La déformation axiale de la deuxième portion 19 peut être obtenue en écrasant la deuxième portion 19, par exemple au moyen d'une presse hydraulique. L'écrasement de la deuxième portion 19 provoque une déformation axiale permanente de la deuxième portion 19 de la cheville 8.

Les fentes 43 et 44 constituent des zones de moindre résistance favorisant une déformation axiale de la deuxième portion 19 sous l'effet de l'effort d'écrasement appliqué à la cheville 8 parallèlement à la direction X.

Sous l'effet de cet effort d'écrasement, les fentes 43 et 44 se sont légèrement refermées, et les parties de matière de la deuxième portion 19 situées de part et d'autre des fentes 43 et 44 se sont rapprochées les unes des autres.

La fermeture des fentes 43 et 44 et le rapprochement des parties de matière situées de part et d'autre des fentes 43 et 44, entraine une diminution locale du pas du filet interne 25 de l'alésage 21 dans la deuxième portion 19.

L'engagement du filet externe 26' de la vis 9 dans le filet interne 25 distordu provoque une déformation élastique axiale de la portion de verrouillage 19. Autrement dit, la portion de verrouillage 19 de la cheville 8 est déformée élastiquement sous l'action du filet externe 26' de la vis 9. Cela a pour effet de créer un effort de frottement sur le filet externe 26' de la vis 9, ce qui empêche un desserrage ultérieur de la vis 9 du fait de vibrations de la paroi 2 ou d'une rotation de la cosse 6 par rapport à la paroi 2. La vis est ainsi verrouillée dans la cheville 8.

## Revendications

1. Dispositif de fixation (1) d'une cosse (6) de raccordement électrique sur un support (2), comprenant une bague (7) propre à être reçue dans un orifice (5) ménagé dans le support (2) et une cheville (8) propre à être insérée en force dans la bague (7) pour provoquer une déformation de la bague (7) de manière à enchâsser la bague (7) dans l'orifice (5), la cheville (8) présentant un alésage taraudé (21) propre à recevoir une vis de fixation (9) pour fixer la cosse (6) sur la bague (7), l'alésage taraudé (21) présentant un filet interne (25) avec lequel un filet externe (26') de la vis (9) vient en engagement, **caractérisé en ce que** la cheville comprend une portion de verrouillage (19) dans laquelle le filet interne (25) de l'alésage (21) est distordu, de sorte que l'engagement du filet externe (26') de la vis (9) avec le filet interne (25) de l'alésage (21) dans la portion de verrouillage provoque un verrouillage de la vis (9) dans la cheville (8).

2. Dispositif selon la revendication 1, dans lequel la distorsion du filet interne (25) dans la portion de verrouillage (19) est obtenue par écrasement de la portion de verrouillage (19).

3. Dispositif selon la revendication 2, dans lequel la portion de verrouillage (19) a subi un écrasement selon une direction radiale par rapport à un axe de l'alésage (21).

4. Dispositif selon la revendication 3, dans lequel, dans la portion de verrouillage (19), le filet interne (25) de l'alésage (21) présente une forme hélicoïdale non circulaire multilobée.

5. Dispositif selon la revendication 3, dans lequel la portion de verrouillage (19) a subi un écrasement dans deux zones diamétralement opposées (37, 38).

6. Dispositif selon la revendication 3, dans lequel la portion de verrouillage (19) a subi un écrasement dans trois zones (26, 27, 28) réparties angulairement à 120° les unes des autres autour d'un axe de l'alésage (21).

7. Dispositif selon la revendication 3, dans lequel la portion de verrouillage (19) a subi un écrasement dans quatre zones (39-42) agencées deux à deux symétriquement de part et d'autre d'un plan de symétrie passant par l'axe de l'alésage (21).

8. Dispositif selon la revendication 2, dans lequel la portion de verrouillage (19) a subi un écrasement selon une direction axiale de l'alésage (21).

9. Dispositif selon la revendication 8, dans lequel, la portion de verrouillage (19) présente une ou plusieurs fentes (43, 44) transversales ayant favorisé l'écrasement de la portion de verrouillage (19) selon la direction axiale de l'alésage (21).

10. Dispositif selon l'une des revendications qui précèdent, dans lequel la bague (7) présente une portion de réception (12), la cheville (8) comprenant une portion (18) propre à être insérée en force dans la portion de réception (12) de la bague (7) pour provoquer la déformation de la bague (7).

11. Dispositif selon la revendication 10, dans lequel la portion d'insertion (18) de la cheville (8) présente une surface externe (20) de forme sensiblement conique.

12. Dispositif selon l'une des revendications 10 et 11, dans lequel la portion de réception (12) de la bague (7) présente une surface interne (16) de forme sensiblement conique ou cylindrique.

13. Dispositif selon l'une des revendications 10 à 12, dans lequel, une fois la portion d'insertion (18) de la cheville (8) insérée en force dans la portion de réception (12) de la bague (7), la portion de verrouillage (19) de la cheville fait saillie à l'extérieur de la portion de réception (12).

14. Dispositif selon l'une des revendications 10 à 13, dans lequel la cheville (8) présente une paroi entourant l'alésage (21), la paroi présentant, dans la portion de verrouillage (19), une épaisseur inférieure à une épaisseur de la paroi dans la portion d'insertion (18).

15. Dispositif selon l'une des revendications qui précèdent, dans lequel la bague (7) est formée en un premier matériau et la cheville (8) est formée en un deuxième matériau, le premier matériau présentant une dureté inférieure à la dureté du deuxième matériau.

16. Dispositif selon l'une des revendications qui précèdent, dans lequel la bague (7) est en alliage d'aluminium ou en cuivre et la cheville (8) est en alliage d'aluminium, en titane ou en acier.

17. Dispositif selon l'une des revendications qui précèdent, dans lequel la cheville (8) présente un épaulement (35) propre à venir en butée contre la bague (7) pour limiter l'insertion de la cheville (8) dans la bague (7).

18. Dispositif selon l'une des revendications qui précèdent, dans lequel, la bague (7) présente un épaulement (13) propre à venir en appui contre une surface du support (2) d'un premier côté (3) du support (2), tandis que la deuxième portion (19) de la cheville (8) s'étend d'un deuxième côté (4) du support (2), opposé au premier côté (3) du support (2).

19. Dispositif selon l'une des revendications qui précèdent, dans lequel la cheville (8) est formée en une seule pièce de matériau.

20. Un procédé pour la fixation d'une cosse (6) de raccordement électrique sur un support (2) avec un dispositif de fixation (1), le dispositif de fixation comprenant une bague (7) propre à être reçue dans un orifice (5) ménagé dans le support (2) et une cheville (8) propre à être insérée en force dans la bague (7) pour provoquer une déformation de la bague (7) de manière à enchâsser la bague (7) dans l'orifice (5), la cheville (8) présentant un alésage taraudé (21) propre à recevoir une vis de fixation (9) pour fixer la cosse (6) sur la bague (7), l'alésage taraudé (21) présentant un filet interne (25) avec lequel un filet externe (26') de la vis (9) vient en engagement, le procède comprenant les étapes suivantes :
insertion de la bague (7) dans l'orifice (5) du support (2); et
insertion en force de la cheville (8) dans la bague (7) pour provoquer une déformation de la bague (7) de manière à enchâsser la bague (7) dans l'orifice (5) du support (2), **caractérisé en ce que** la cheville comprend une portion de verrouillage (19) dans laquelle le filet interne (25) de l'alésage (21) est distordu, de sorte que l'engagement du filet externe (26) de la vis (9) avec le filet interne (25) de l'alésage (21) dans la portion de verrouillage provoque un verrouillage de la vis (9) dans la cheville (8).

21. Un procédé selon la revendication 20 comprenant l'étape additionnel suivante:
introduction de la cheville (8) dans la bague (7) de manière à solidariser la bague (7) et la cheville (8) entre elles avant l'insertion en force de la cheville (8) dans la bague (7).

## Patentansprüche

1. Vorrichtung zur Befestigung (1) eines Kabelschuhs (6) zur elektrischen Verbindung auf einem Träger (2), umfassend einen Ring (7), der geeignet ist, in einer Öffnung (5) aufgenommen zu werden, die in dem Träger (2) ausgebildet ist, und einen Dübel (8), der geeignet ist, in den Ring (7) eingepresst zu werden, um eine Verformung des Ringes (7) zu bewirken, so dass der Ring (7) in die Öffnung (5) eingeschoben wird, wobei der Dübel (8) eine Gewindebohrung (21) aufweist, die geeignet ist, eine Befestigungsschraube (9) zum Befestigen des Kabelschuhs (6) auf dem Ring (7) aufzunehmen, wobei die Gewindebohrung (21) ein Innengewinde (25) aufweist, mit dem ein Außengewinde (26') der Schraube (9) in Eingriff steht, **dadurch gekennzeichnet, dass** der Dübel einen Verriegelungsabschnitt (19) umfasst, in dem das Innengewinde (25) der Bohrung (21) verzerrt wird, so dass der Eingriff des Außengewindes (26') der Schraube (9) mit dem Innengewinde (25) der Bohrung (21) in dem Verriegelungsabschnitt eine Verriegelung der Schraube (9) in dem Dübel (8) bewirkt.

2. Vorrichtung nach Anspruch 1, wobei die Verzerrung des Innengewindes (25) in dem Verriegelungsabschnitt (19) durch Quetschung des Verriegelungsabschnittes (19) erhalten wird.

3. Vorrichtung nach Anspruch 2, wobei der Verriegelungsabschnitt (19) einer Quetschung gemäß einer in Bezug auf eine Bohrungsachse (21) radialen Richtung unterzogen wurde.

4. Vorrichtung nach Anspruch 3, wobei in dem Verriegelungsabschnitt (19) das Innengewinde (25) der Bohrung (21) eine schneckenförmige, nichtrunde, mehrlappige Form aufweist.

5. Vorrichtung nach Anspruch 3, wobei der Verriegelungsabschnitt (19) einer Quetschung in zwei diametral gegenüberliegenden Bereichen (37, 38) unterzogen wurde.

6. Vorrichtung nach Anspruch 3, wobei der Verriegelungsabschnitt (19) einer Quetschung in drei Bereichen (26, 27, 28) unterzogen wurde, die rund um eine Bohrungsachse (21) winkelig um 120° zueinander verteilt sind.

7. Vorrichtung nach Anspruch 3, wobei der Verriegelungsabschnitt (19) einer Quetschung in vier Bereichen (39-42) unterzogen wurde, die paarweise symmetrisch auf beiden Seiten einer Symmetrieebene angeordnet sind, die durch die Bohrungsachse (21) verläuft.

8. Vorrichtung nach Anspruch 2, wobei der Verriegelungsabschnitt (19) einer Quetschung gemäß einer axialen Richtung der Bohrung (21) unterzogen wurde.

9. Vorrichtung nach Anspruch 8, wobei der Verriegelungsabschnitt (19) einen oder mehrere quer verlaufende Schlitze (43, 44) aufweist, die die Quetschung des Verriegelungsabschnittes (19) gemäß der axialen Richtung der Bohrung (21) begünstigt haben.

10. Vorrichtung nach einem der vorstehenden Ansprüche, wobei der Ring (7) einen Aufnahmeabschnitt (12) aufweist, wobei der Dübel (8) einen Abschnitt (18) umfasst, der geeignet ist, in den Aufnahmeabschnitt (12) des Ringes (7) eingepresst zu werden, um die Verformung des Ringes (7) zu bewirken.

11. Vorrichtung nach Anspruch 10, wobei der Einpressabschnitt (18) des Dübels (8) eine Außenfläche (20) mit einer im Wesentlichen konischen Form aufweist.

12. Vorrichtung nach einem der Ansprüche 10 und 11, wobei der Aufnahmeabschnitt (12) des Ringes (7) eine Innenfläche (16) mit einer im Wesentlichen konischen oder zylindrischen Form aufweist.

13. Vorrichtung nach einem der Ansprüche 10 bis 12, wobei, wenn der Einpressabschnitt (18) des Dübels (8) in den Aufnahmeabschnitt (12) des Ringes (7) eingepresst wird, der Verriegelungsabschnitt (19) des Dübels außerhalb des Aufnahmeabschnittes (12) hervorsteht.

14. Vorrichtung nach einem der Ansprüche 10 bis 13, wobei der Dübel (8) eine die Bohrung (21) umgebende Wand aufweist, wobei die Wand in dem Verriegelungsabschnitt (19) eine Dicke aufweist, die geringer ist als eine Dicke der Wand in dem Einpressabschnitt (18).

15. Vorrichtung nach einem der vorstehenden Ansprüche, wobei der Ring (7) aus einem ersten Material gebildet ist und der Dübel (8) aus einem zweiten Material gebildet ist, wobei das erste Material eine Härte aufweist, die geringer ist als die Härte des zweiten Materials.

16. Vorrichtung nach einem der vorstehenden Ansprüche, wobei der Ring (7) aus einer Aluminiumlegierung oder aus Kupfer ist und der Dübel (8) aus einer Aluminiumlegierung, aus Titan oder aus Stahl ist.

17. Vorrichtung nach einem der vorstehenden Ansprüche, wobei der Dübel (8) einen Vorsprung (35) aufweist, der geeignet ist, an den Ring (7) anzuschlagen, um das Einpressen des Dübels (8) in den Ring (7) zu begrenzen.

18. Vorrichtung nach einem der vorstehenden Ansprüche, wobei der Ring (7) einen Vorsprung (13) aufweist, der geeignet ist, gegen eine Fläche des Trägers (2) einer ersten Seite (3) des Trägers (2) zu drücken, während sich der zweite Abschnitt (19) des Dübels (8) auf einer zweiten Seite (4) des Trägers (2) erstreckt, die der ersten Seite (3) des Trägers (2) gegenüberliegt.

19. Vorrichtung nach einem der vorstehenden Ansprüche, wobei der Dübel (8) aus einem einzelnen Materialstück gebildet ist.

20. Verfahren zur Befestigung eines Kabelschuhs (6) zur elektrischen Verbindung auf einem Träger (2) mittels einer Befestigungsvorrichtung (1), wobei die Befestigungsvorrichtung einen Ring (7), der geeignet ist, in einer Öffnung (5) aufgenommen zu werden, die in dem Träger (2) ausgebildet ist, und einen Dübel (8) umfasst, der geeignet ist, in den Ring (7) eingepresst zu werden, um eine Verformung des Ringes (7) zu bewirken, so dass der Ring (7) in die Öffnung (5) eingeschoben wird, wobei der Dübel (8) eine Gewindebohrung (21) aufweist, die geeignet ist, eine Befestigungsschraube (9) zum Befestigen des Kabelschuhs (6) auf dem Ring (7) aufzunehmen, wobei die Gewindebohrung (21) ein Innengewinde (25) aufweist, mit dem ein Außengewinde (26') der Schraube (9) in Eingriff steht, wobei das Verfahren folgende Schritte umfasst:
Einsetzen des Ringes (7) in die Öffnung (5) des Trägers (2); und
Einpressen des Dübels (8) in den Ring (7), um eine Verformung des Ringes (7) zu bewirken, so dass der Ring (7) in die Öffnung (5) des Trägers (2) eingeschoben wird, **dadurch gekennzeichnet, dass** der Dübel einen Verriegelungsabschnitt (19) umfasst, in dem das Innengewinde (25) der Bohrung (21) verzerrt wird, so dass der Eingriff des Außengewindes (26) der Schraube (9) mit dem Innengewinde (25) der Bohrung (21) in dem Verriegelungsabschnitt eine Verriegelung der Schraube (9) in dem Dübel (8) bewirkt.

21. Verfahren nach Anspruch 20, umfassend den folgenden zusätzlichen Schritt:
Einführen des Dübels (8) in den Ring (7), so dass der Ring (7) und der Dübel (8) fest miteinander verbunden werden, bevor der Dübel (8) in den Ring (7) eingepresst wird.

## Claims

1. Fixing device (1) of a terminal (6) for electrical connection to a support (2), comprising a ring (7) adapted to be received in a hole (5) formed in the support (2) and a pin (8) adapted to be forcibly inserted into the ring (7) to cause deformation of the ring (7) so as to embed the ring (7) into the hole (5), the pin (8) having a threaded bore (21) for receiving a fastening screw (9) for securing the terminal (6) on the ring (7), the threaded bore (21) having an internal thread (25) with which an external thread (26') of the screw (9) engages, **characterised in that** the pin comprises a locking portion (19) in which the internal thread (25) of the bore (21) is distorted, so that the engagement of the external thread (26') of the screw (9) with the internal thread (25) of the bore (21) in the locking portion causes locking of the screw (9) in the pin (8).

2. Device according to claim 1, wherein the distortion of the internal thread (25) in the locking portion (19) is obtained by crushing of the locking portion (19).

3. Device according to claim 2, wherein the locking portion (19) has suffered crushing in a radial direction relative to an axis of the bore (21).

4. Device according to claim 3, wherein in the locking portion (19), the internal thread (25) of the bore (21) has a multi-lobed non-circular helical shape.

5. Device according to claim 3, wherein the locking portion (19) has suffered crushing in two diametrically opposite zones (37, 38).

6. Device according to claim 3, wherein the locking portion (19) has suffered crushing in three zones (26, 27, 28) distributed angularly at 120° from one another about an axis of the bore (21).

7. Device according to claim 3, wherein the locking portion (19) has suffered crushing in four zones (39-42) arranged in pairs symmetrically on either side of a plane of symmetry passing through the axis of the bore (21).

8. Device according to claim 2, wherein the locking portion (19) has suffered crushing in an axial direction of the bore (21).

9. Device according to claim 8, wherein the locking portion (19) has one or more slots (43, 44) having transverse favoured the crushing of the locking portion (19) in the axial direction of the bore (21).

10. Device according to any one of the preceding claims, wherein the ring (7) has a receiving portion (12), the pin (8) comprising a portion (18) adapted to be forcibly inserted into the receiving portion (12) of the ring (7) for causing the deformation of the ring (7).

11. Device according to claim 10, wherein the insertion portion (18) of the pin (8) has an outer surface (20) of substantially conical shape.

12. Device according to claim 10 and 11, wherein the receiving portion (12) of the pin (7) has an inner surface (16) of substantially conical or cylindrical shape.

13. Device according to any one of claims 10 to 12, wherein, once the insertion portion (18) of the pin (8) forcibly inserted into the receiving portion (12) of the ring (7) the locking portion (19) of the pin protrudes outside of the receiving portion (12).

14. Device according to any one of claims 10 to 13, wherein the pin (8) has a wall surrounding the bore (21), the wall having in the locking portion (19), a thickness less than a thickness of the wall in the insertion portion (18).

15. Device according to any one of the preceding claims, wherein the ring (7) is formed of a first material and the pin (8) is formed of a second material, the first material having hardness less than the hardness of the second material.

16. Device according to any one of the preceding claims, wherein the ring (7) is made of aluminium alloy or copper and the pin (8) is made of aluminium alloy, titanium or steel.

17. Device according to any one of the preceding claims, wherein the pin (8) has a shoulder (35) adapted to abut against the ring (7) for limiting the insertion of the pin (8) into the ring (7).

18. Device according to any one of the preceding claims, wherein the ring (7) has a shoulder (13) adapted to abut against a support surface (2) of a first side (3) of the support (2), while the second portion (19) of the pin (8) extends from a second side (4) of the support (2), opposite the first side (3) of the support (2).

19. Device according to any one of the preceding claims, wherein the pin (8) is formed in a single piece of material.

20. Method the for fixing device of a terminal (6) for electrical connection to a support (2) with a fixing device (1), the fixing device comprising a ring (7) adapted to be received in a hole (5) formed in the support (2) and a pin (8) adapted to be forcibly inserted into the ring (7) to cause deformation of the ring (7) so as to embed the ring (7) into the hole (5), the pin (8) having a threaded bore (21) for receiving a fastening screw (9) for securing the terminal (6) on the ring (7), the threaded bore (21) having an internal thread (25) with which an external thread (26') of the screw (9) engages, the method comprising the following steps:
inserting the ring (7) into the hole (5) of the support (2); and
forcibly inserting the pin (8) into the ring (7) to cause deformation of the ring (7); so as to embed the ring (7) in the hole (5) of the support (2), **characterised in that** the pin comprises a locking portion (19) in which the internal thread (25) of the bore (21) is distorted, so that the engagement of the external thread (26) of the screw (9) with the internal thread (25) of the bore (21) in the locking portion causes locking of the screw (9) in the pin (8).

21. Method according to claim 20 comprising the following additional step:
introducing the pin (8) into the ring (7) so as to rigidly secure the ring (7) and the pin (8) one with the other before the forcible insertion of the pin (8) into the ring (7).
